# EUROPEAN PATENT APPLICATION

(11) **EP 4 674 657 A1**
(43) Date of publication of application: **07.01.2026**
(21) Application number: 24927707.0
(22) Date of filing: 28.10.2024
(51) Int. Cl.: B60K 6/22, B60K 6/36

(54) **POWER SYSTEM AND AUTOMOBILE**

(30) Priority: 23.05.2024 CN 202410646385
(71) Applicant: Chery Automobile Co., Ltd., Wuhu, Anhui 241006 (CN)
(72) Inventor: ZHANG, Hengxian, Wuhu, Anhui 241006 (CN); LI, Shuangluan, Wuhu, Anhui 241006 (CN); YAO, Wangfei, Wuhu, Anhui 241006 (CN); ZHOU, Ying, Wuhu, Anhui 241006 (CN); SUN, Zhongxin, Wuhu, Anhui 241006 (CN)
(74) Representative: Yang, Shu
(86) International application number: PCT/CN2024/127759
(87) International publication number: WO 2025/241419

(57) **Abstract**

Disclosed are a power system and a vehicle, which relate to the field of automotive power transmission technologies. The power system includes: a first transmission mechanism, an intermediate transmission mechanism, and a second transmission mechanism that are sequentially arranged along a length direction of the vehicle. The first transmission mechanism is drivingly connected to a second motor and the intermediate transmission mechanism. A first motor is drivingly connected to the intermediate transmission mechanism. The second transmission mechanism is drivingly connected to the intermediate transmission mechanism. An engine is drivingly connected to the intermediate transmission mechanism. The first transmission mechanism, the intermediate transmission mechanism, and the second transmission mechanism are sequentially arranged along the length direction of the vehicle. On the one hand, the torque of the power generated by the second motor and the engine can be adjusted by the first transmission mechanism and the second transmission mechanism, which is beneficial for the vehicle to operate in a high-efficiency range. On the other hand, the width of the power system according to the present disclosure can also be shortened, which is beneficial for reducing the space occupied in the vehicle.

## Description

The present disclosure claims priority to Chinese Patent Application No. 202410646385.2, filed on May 23, 2024, and entitled "POWER SYSTEM AND VEHICLE", the disclosure of which is herein incorporated by reference in its entirety.

### TECHNICAL FIELD

The present disclosure relates to the field of automotive power transmission technologies, and in particular, relates to a power system and a vehicle.

### BACKGROUND

A vehicle is a means of transportation that generates power to carry users or goods, thereby causing displacement.

The power system of a vehicle generally includes a power source and a gearbox. The power source can generate driving force, and the gearbox adjusts the torque of the driving force and outputs the driving force to the wheels, making it adaptable to the operating conditions of the vehicle.

In the related art, the power system occupies a large space in the vehicle, resulting in difficulties when arranging the power system in the vehicle.

### SUMMARY

In view of this, the present disclosure provides a power system and a vehicle to reduce the space occupied by the power system in the vehicle.

Specifically, the present disclosure includes the following technical solutions.

In a first aspect of the present disclosure, a power system is provided. The power system is applied to a vehicle and includes a first transmission mechanism, an intermediate transmission mechanism, a second transmission mechanism, a first motor, a second motor, and an engine. The first transmission mechanism, the intermediate transmission mechanism, and the second transmission mechanism are sequentially arranged along a length direction of the vehicle. The first transmission mechanism is drivingly connected to the second motor and the intermediate transmission mechanism. The first motor is drivingly connected to the intermediate transmission mechanism. The second transmission mechanism is drivingly connected to the intermediate transmission mechanism. The engine is drivingly connected to the intermediate transmission mechanism.

In some embodiments, the first transmission mechanism includes an input shaft, a first input gear, a second input gear, and a first clutch unit, wherein the second motor is drivingly connected to one end of the input shaft, both the first input gear and the second input gear are sleeved on the input shaft and are drivingly connected to the intermediate transmission mechanism, the first clutch unit is drivingly connected to another end of the input shaft, and the first clutch unit is drivingly connected to the first input gear and the second input gear, respectively.

In some embodiments, the first clutch unit includes a first inner hub, a second inner hub, and a first outer hub, wherein both the first inner hub and the second inner hub are sleeved on the input shaft, the first inner hub is fixedly connected to the first input gear, the second inner hub is fixedly connected to the second input gear, the first outer hub is fixedly connected to another end of the input shaft, and both the first inner hub and the second inner hub are capable of abutting against the first outer hub.

In some embodiments, the first transmission mechanism includes an input shaft, a first input gear, a second input gear, and a first synchronizer, wherein one end of the input shaft is drivingly connected to the second motor, the first input gear and the second input gear are sleeved on the input shaft and are drivingly connected to the intermediate transmission mechanism, the first synchronizer is arranged on the input shaft and is capable of moving along an axial direction of the input shaft to drivingly connect the first input gear with the second motor, and drivingly connect the second input gear with the second motor.

In some embodiments, the intermediate transmission mechanism includes a first intermediate gear, a second intermediate gear, a third intermediate gear, an intermediate shaft, and a second clutch unit, wherein the first intermediate gear, the second intermediate gear, and the third intermediate gear are all sleeved on the intermediate shaft, the first intermediate gear and the third intermediate gear are drivingly connected to the intermediate shaft, the first intermediate gear meshes with the first input gear, and the third intermediate gear meshes with the second input gear, and the second clutch unit is configured to drivingly connect the second intermediate gear with the input shaft, and to drivingly connect the engine with the input shaft.

In some embodiments, the number of teeth of the first input gear is greater than the number of teeth of the first intermediate gear, and the number of teeth of the second input gear is less than the number of teeth of the third intermediate gear.

In some embodiments, the second transmission mechanism includes a first output gear, a second output gear, a third output gear, an output shaft, and a second synchronizer, wherein the first output gear, the second output gear, the third output gear, and the second synchronizer are all sleeved on the output shaft, both the second output gear and the second synchronizer are drivingly connected to the output shaft, the second synchronizer is capable of moving along an axial direction of the output shaft to drivingly connect the output shaft with the first output gear, and to drivingly connect the output shaft with the second output gear, the first output gear meshes with the first intermediate gear, the second output gear meshes with the second intermediate gear, and the third output gear meshes with the third intermediate gear.

In some embodiments, the power system further includes a third clutch unit, wherein the third clutch unit is drivingly connected to the intermediate transmission mechanism and the engine, and the third clutch unit and the first transmission mechanism are disposed on two opposite sides of the second motor along a width direction of the vehicle.

In some embodiments, the first motor is sleeved on an outer side of the third clutch unit, and at least a portion of the third clutch unit serves as a rotor of the first motor.

In a second aspect of the present disclosure, a vehicle is provided. The vehicle includes the power system as described in the above technical solutions.

The technical solutions according to the embodiments of the present disclosure at least achieve the following beneficial effects: The first transmission mechanism can adjust the torque of the power generated by the second motor, and the second transmission mechanism can adjust the torque of the power passing through the intermediate transmission mechanism. The first transmission mechanism, the intermediate transmission mechanism, and the second transmission mechanism are sequentially arranged along the length direction of the vehicle. On the one hand, the torque of the power generated by the second motor and the engine can be adjusted by the first transmission mechanism and the second transmission mechanism, which is beneficial for the vehicle to operate in a high-efficiency range. On the other hand, the width of the power system according to the present disclosure can also be shortened, which is beneficial for reducing the space occupied in the vehicle.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of a power system according to some embodiments of the present disclosure;
FIG. 2 is a schematic structural diagram of another power system according to some embodiments of the present disclosure;
FIG. 3 is a schematic structural diagram of yet another power system according to some embodiments of the present disclosure; and
FIG. 4 is a fully sectional schematic diagram of a first clutch unit according to some embodiments of the present disclosure.

The reference numerals in the accompanying drawings are respectively denoted as:
1, first transmission mechanism; 11, input shaft; 12, first input gear; 13, second input gear; 14, first clutch unit; 140, first cavity; 141, first inner hub; 142, second inner hub; 143, first outer hub; 144, first spring; 15, first synchronizer;
2, intermediate transmission mechanism; 21, first intermediate gear; 22, second intermediate gear; 23, third intermediate gear; 24, intermediate shaft; 25, second clutch unit; 251, second outer hub; 252, third inner hub; 253, fourth inner hub;
3, second transmission mechanism; 31, first output gear; 32, second output gear; 33, third output gear; 34, output shaft; 35, second synchronizer;
4, first motor;
5, second motor;
6, engine;
7, third clutch unit; 71, third outer hub; 72, fifth inner hub.

The above accompanying drawings have shown the explicit embodiments of the present disclosure, which will be described in detail hereinafter. These accompanying drawings and text descriptions are not intended to limit the scope of the conception of the present disclosure in any way, but to illustrate the concept of the present disclosure to those skilled in the art with reference to specific embodiments.

### DETAILED DESCRIPTION

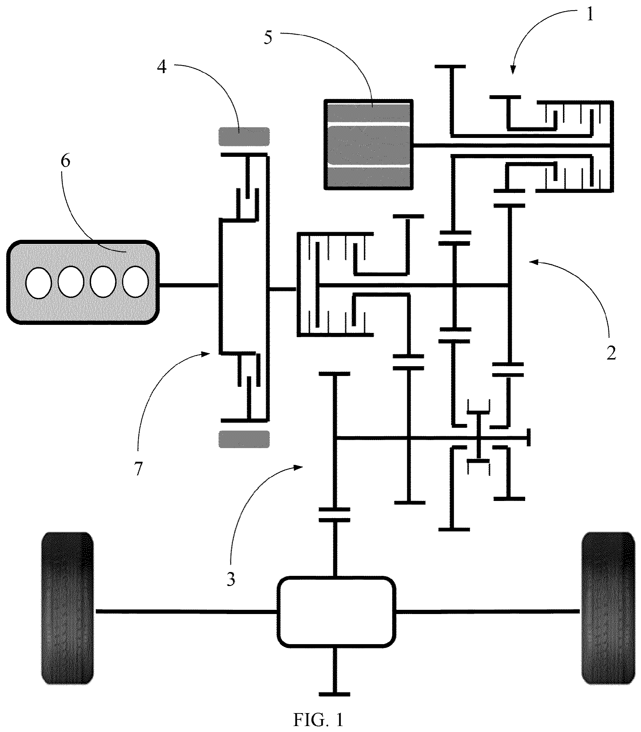

To make the objectives, technical solutions, and advantages of the present disclosure clearer, embodiments of the present disclosure are further described in detail below with reference to the accompanying drawings. In a first aspect of the present disclosure, a power system is provided. The power system is applied to a vehicle. As shown in FIG. 1, the power system includes a first transmission mechanism 1, an intermediate transmission mechanism 2, a second transmission mechanism 3, a first motor 4, a second motor 5, and an engine 6. The first transmission mechanism 1, the intermediate transmission mechanism 2, and the second transmission mechanism 3 are sequentially arranged along a length direction of the vehicle. The first transmission mechanism 1 is drivingly connected to the second motor 5 and the intermediate transmission mechanism 2. The first motor 4 is drivingly connected to the intermediate transmission mechanism 2. The second transmission mechanism 3 is drivingly connected to the intermediate transmission mechanism 2. The engine 6 is drivingly connected to the intermediate transmission mechanism 2.

It should be understood that the first transmission mechanism 1 can adjust the torque of the power generated by the second motor 5, and the second transmission mechanism 3 can adjust the torque of the power passing through the intermediate transmission mechanism 2. The first transmission mechanism 1, the intermediate transmission mechanism 2, and the second transmission mechanism 3 are sequentially arranged along the length direction of the vehicle. On the one hand, the torque of the power generated by the second motor 5 and the engine 6 can be adjusted by the first transmission mechanism 1 and the second transmission mechanism 3, which is beneficial for the vehicle to operate in a high-efficiency range. On the other hand, the width of the power system according to the present disclosure can also be shortened, which is beneficial for reducing the space occupied in the vehicle.

In the related art, the width of the power system is mainly affected by a gearbox. The gearbox generally adjusts the torque by forming, through different gears arranged on a shaft, a power transmission between a power source and wheels. Since a certain gap is required between the gears, the shaft becomes long, and the shaft generally extends along the width direction of a vehicle frame, thus causing the power system to occupy more space in the width direction of the vehicle frame.

In the present disclosure, the gearbox is separated into the first transmission mechanism 1, the intermediate transmission mechanism 2, and the second transmission mechanism 3, and the three mechanisms are arranged along the length direction of the vehicle, thereby shortening the overall width and thus reducing the space occupied in the vehicle.

In the embodiments of the present disclosure, the engine 6 is disposed on one side of the intermediate transmission mechanism 2.

In the embodiments of the present disclosure, the second motor 5 may serve as a drive motor, and the first motor 4 may serve as a generator.

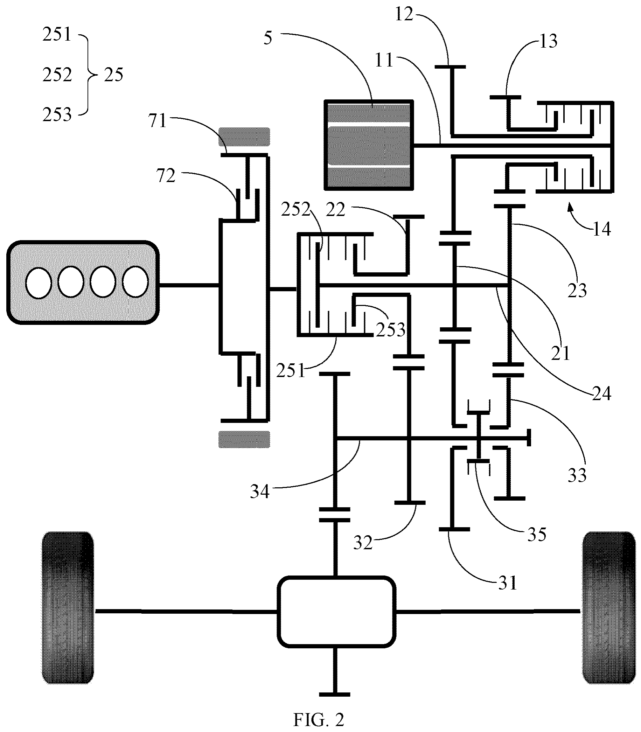

In some embodiments of the present disclosure, as shown in FIG. 2, the first transmission mechanism 1 includes an input shaft 11, a first input gear 12, a second input gear 13, and a first clutch unit 14. The second motor 5 is drivingly connected to one end of the input shaft 11. Both the first input gear 12 and the second input gear 13 are sleeved on the input shaft 11 and are drivingly connected to the intermediate transmission mechanism 2. The first clutch unit 14 is drivingly connected to the other end of the input shaft 11, and the first clutch unit 14 is drivingly connected to the first input gear 12 and the second input gear 13, respectively.

It should be understood that the second motor 5 located at one end of the input shaft 11 can provide support for the input shaft 11 and can also realize the power transmission to the input shaft 11, which is beneficial for the first input gear 12 and the second input gear 13 to transmit power from the second motor 5 to the intermediate transmission mechanism 2 and to adjust the power. The first clutch unit 14 can realize the transmission and cut-off of power between the first input gear 12 and the input shaft 11, and also realize the transmission and cut-off of power between the second input gear 13 and the input shaft 11. The first clutch unit 14 is disposed at the other end of the input shaft 11, which is beneficial for the input shaft 11 to provide support for the first unit.

In the embodiments of the present disclosure, the first input gear 12 and the second input gear 13 may each mesh with the intermediate transmission mechanism 2 to realize transmission.

In the embodiments of the present disclosure, the number of teeth of the first input gear 12 is greater than the number of teeth of the second input gear 13, and the first input gear 12 is farther from the first clutch unit 14 than the second input gear 13. This is beneficial for dispersing the weight loaded on the input shaft 11.

In the embodiments of the present disclosure, a bearing may be arranged between the first input gear 12 and the input shaft 11, such that the first input gear 12 and the input shaft 11 can rotate relative to each other when separated by the first clutch unit 14.

In the embodiments of the present disclosure, a bearing may be arranged between the second input gear 13 and the input shaft 11, such that the second input gear 13 and the input shaft 11 can rotate relative to each other when separated by the first clutch unit 14.

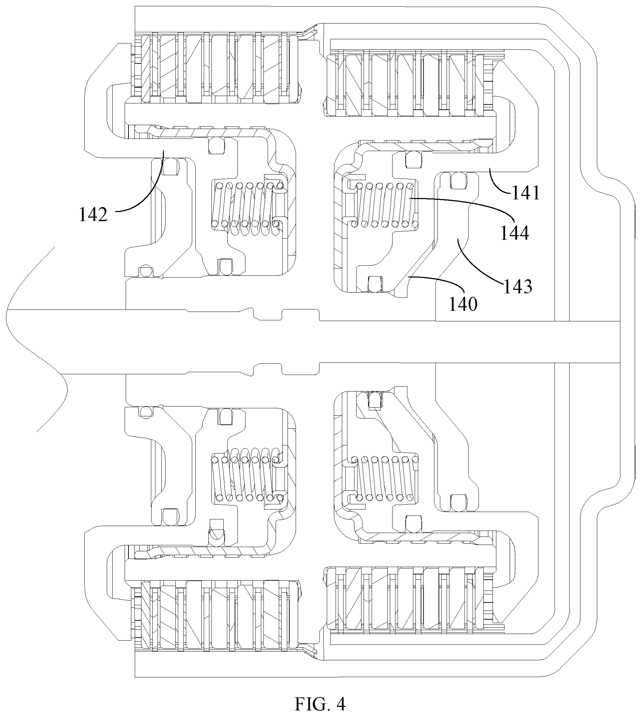

In some embodiments of the present disclosure, as shown in FIG. 4, the first clutch unit 14 includes a first inner hub 141, a second inner hub 142, and a first outer hub 143. Both the first inner hub 141 and the second inner hub 142 are sleeved on the input shaft 11. The first inner hub 141 is fixedly connected to the first input gear 12, the second inner hub 142 is fixedly connected to the second input gear 13, the first outer hub 143 is fixedly connected to the other end of the input shaft 11, and both the first inner hub 141 and the second inner hub 142 can abut against the first outer hub 143.

It should be understood that when the first inner hub 141 abuts against the first outer hub 143, the input shaft 11 can drive the first input gear 12 to rotate, thereby realizing power transmission. Correspondingly, when the second inner hub 142 abuts against the first outer hub 143, the input shaft 11 can drive the second input gear 13 to rotate, thereby realizing power transmission.

In the embodiments of the present disclosure, the first inner hub 141 may be fixedly connected to the first input gear 12 by welding or the like.

In the embodiments of the present disclosure, the second inner hub 142 may be fixedly connected to the second input gear 13 by welding or the like.

In the embodiments of the present disclosure, as shown in FIG. 4, the first outer hub 143 and the first inner hub 141 can enclose a first cavity 140 that can be filled with liquid. By filling liquid into the first cavity 140, the volume of the first cavity 140 can be increased, which drives the first outer hub 143 to abut against the first inner hub 141. Pumping the liquid out of the first cavity 140 can achieve separation between the first outer hub 143 and the first inner hub 141. The first inner hub 141 can move relative to the first outer hub 143, thereby expanding the volume of the first cavity 140. The first outer hub 143 is also connected to the first inner hub 141 via a first spring 144, and in the case that the liquid is pumped out, the first spring 144 can drive the first inner hub 141 to reset, such that the first cavity 140 returns to its original state.

In the embodiments of the present disclosure, a plurality of layers of friction plates may be arranged between the first inner hub 141 and the first outer hub 143. The friction plates can come into contact with the first outer hub 143 under the drive of the first inner hub 141, thereby generating a friction force that impedes the relative rotation between the first inner hub 141 and the first outer hub 143.

In the embodiments of the present disclosure, the first outer hub 143 and the second inner hub 142 can enclose a second cavity that can be filled with liquid. By filling liquid into the second cavity, the volume of the second cavity can be increased, which drives the first outer hub 143 to abut against the second inner hub 142. Pumping the liquid out of the second cavity can achieve separation between the first outer hub 143 and the second inner hub 142. The second inner hub 142 can move relative to the first outer hub 143, thereby expanding the volume of the second cavity. The first outer hub 143 is also connected to the second inner hub 142 via a second spring, and in the case that the liquid is pumped out, the second spring can drive the second inner hub 142 to reset, such that the second cavity returns to its original state.

In the embodiments of the present disclosure, a plurality of layers of friction plates may be arranged between the second inner hub 142 and the first outer hub 143. The friction plates can come into contact with the first outer hub 143 under the drive of the second inner hub 142, thereby generating a friction force that impedes the relative rotation between the second inner hub 142 and the first outer hub 143.

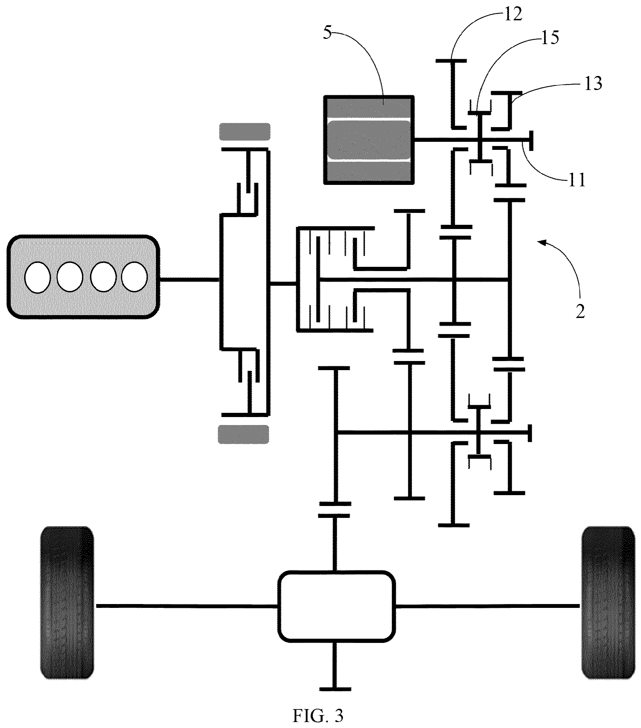

In some embodiments of the present disclosure, as shown in FIG. 3, the first transmission mechanism 1 includes an input shaft 11, a first input gear 12, a second input gear 13, and a first synchronizer 15. One end of the input shaft 11 is drivingly connected to the second motor 5. The first input gear 12 and the second input gear 13 are sleeved on the input shaft 11 and are drivingly connected to the intermediate transmission mechanism 2. The first synchronizer 15 is arranged on the input shaft 11 and can move along an axial direction of the input shaft 11 to drivingly connect the first input gear 12 with the second motor 5, and to drivingly connect the second input gear 13 with the second motor 5.

It should be understood that moving the first synchronizer 15 can realize the transmission between the first input gear 12 and the input shaft 11 and transmission between the second input gear 13 and the input shaft 11, which is beneficial for the first transmission mechanism 1 to transmit power from the second motor 5.

In the embodiments of the present disclosure, the number of teeth of the first input gear 12 is greater than the number of teeth of the second input gear 13, and the first input gear 12 is closer to the second motor 5 than the second input gear 13.

In some embodiments of the present disclosure, as shown in FIG. 2, the intermediate transmission mechanism 2 includes a first intermediate gear 21, a second intermediate gear 22, a third intermediate gear 23, an intermediate shaft 24, and a second clutch unit 25. The first intermediate gear 21, the second intermediate gear 22, and the third intermediate gear 23 are all sleeved on the intermediate shaft 24. The first intermediate gear 21 and the third intermediate gear 23 are drivingly connected to the intermediate shaft 24. The first intermediate gear 21 meshes with the first input gear 12, and the third intermediate gear 23 meshes with the second input gear 13. The second clutch unit 25 is configured to drivingly connect the second intermediate gear 22 with the input shaft 11, and to drivingly connect the engine 6 with the input shaft 11.

It should be understood that the first intermediate gear 21, the second intermediate gear 22, and the third intermediate gear 23 can be configured to transmit the driving force from the engine 6 and the second motor 5, where the number of teeth of each of the three gears is different, to adjust the torque of the driving force to different degrees. The three gears can also be combined with the first transmission mechanism 1 to form a power system with more gear ratios than a power system including only the intermediate transmission mechanism 2, thereby facilitating the adaptability of the power system of the present disclosure to complex road conditions.

In the embodiments of the present disclosure, the second clutch unit 25 includes a second outer hub 251, a third inner hub 252, and a fourth inner hub 53. The power system includes a third clutch unit 7, and the third clutch unit 7 includes a third outer hub 71 and a fifth inner hub 72. The fifth outer hub is fixedly connected to the second outer hub 251, the fifth inner hub 72 is fixedly connected to a crankshaft of the engine 6, and the third outer hub 71 abuts against the fifth inner hub 72 to drivingly connect the engine 6 with the second outer hub 251. The third inner hub 252 is fixedly connected to the intermediate shaft 24, the fourth inner hub 53 is fixedly connected to the second intermediate gear 22, and the third inner hub 252 and the fourth inner hub 53 may each abut against the second outer hub 251, thereby realizing the transmission between the second intermediate gear 22 and the input shaft 11, and realizing the transmission between the first motor 4 and the input shaft 11.

In the embodiments of the present disclosure, the second outer hub 251 and the third inner hub 252 can enclose a third cavity that can be filled with liquid. By filling liquid into the third cavity, the volume of the third cavity can be increased, which drives the second outer hub 251 to abut against the third inner hub 252. Pumping the liquid out of the third cavity can achieve separation between the second outer hub 251 and the third inner hub 252. The third inner hub 252 can move relative to the second outer hub 251, thereby expanding the volume of the third cavity. The second outer hub 251 is also connected to the third inner hub 252 via a third spring, and in the case that the liquid is pumped out, the third spring can drive the third inner hub 252 to reset, such that the third cavity returns to its original state.

In the embodiments of the present disclosure, a plurality of layers of friction plates may be arranged between the third inner hub 252 and the second outer hub 251. The friction plates can come into contact with the second outer hub 251 under the drive of the third inner hub 252, thereby generating a friction force that impedes the relative rotation between the third inner hub 252 and the second outer hub 251.

In the embodiments of the present disclosure, the second outer hub 251 and the fourth inner hub 53 can enclose a fourth cavity that can be filled with liquid. By filling liquid into the fourth cavity, the volume of the fourth cavity can be increased, which drives the second outer hub 251 to abut against the fourth inner hub 53. Pumping the liquid out of the fourth cavity can achieve separation between the second outer hub 251 and the fourth inner hub 53. The fourth inner hub 53 can move relative to the second outer hub 251, thereby expanding the volume of the fourth cavity. The second outer hub 251 is also connected to the fourth inner hub 53 via a fourth spring, and in the case that the liquid is pumped out, the fourth spring can drive the fourth inner hub 53 to reset, such that the fourth cavity returns to its original state.

In the embodiments of the present disclosure, a plurality of layers of friction plates may be arranged between the fourth inner hub 53 and the second outer hub 251. The friction plates can come into contact with the second outer hub 251 under the drive of the fourth inner hub 53, thereby generating a friction force that impedes the relative rotation between the fourth inner hub 53 and the second outer hub 251.

In the embodiments of the present disclosure, the third outer hub 71 and the fifth inner hub 72 can enclose a fifth cavity that can be filled with liquid. By filling liquid into the fifth cavity, the volume of the fifth cavity can be increased, which drives the third outer hub 71 to abut against the fifth inner hub 72. Pumping the liquid out of the fifth cavity can achieve separation between the third outer hub 71 and the fifth inner hub 72. The fifth inner hub 72 can move relative to the second outer hub 251, thereby expanding the volume of the fifth cavity. The third outer hub 71 is also connected to the fifth inner hub 72 via a fifth spring, and in the case that the liquid is pumped out, the fifth spring can drive the fifth inner hub 72 to reset, such that the fifth cavity returns to its original state.

In the embodiments of the present disclosure, a plurality of layers of friction plates may be arranged between the fifth inner hub 72 and the third outer hub 71. The friction plates can come into contact with the third outer hub 71 under the drive of the fifth inner hub 72, thereby generating a friction force that impedes the relative rotation between the fifth inner hub 72 and the third outer hub 71.

In some embodiments of the present disclosure, the number of teeth of the first input gear 12 is greater than the number of teeth of the first intermediate gear 21, and the number of teeth of the second input gear 13 is less than the number of teeth of the third intermediate gear 23.

It should be understood that the number of teeth of the first input gear 12 being greater than the number of teeth of the first intermediate gear 21 is beneficial for the intermediate transmission mechanism 2 to obtain a rotational speed greater than that of the input shaft 11, and the number of teeth of the second input gear 13 being less than the number of teeth of the third intermediate gear 23 is beneficial for the intermediate transmission mechanism 2 to obtain a torque greater than that of the input shaft 11. By inputting power with significantly different magnitudes to the intermediate transmission mechanism 2, the power system of the present disclosure is beneficial for operating in high-efficiency ranges under different road conditions.

In some embodiments of the present disclosure, as shown in FIG. 2, the second transmission mechanism 3 includes a first output gear 31, a second output gear 32, a third output gear 33, an output shaft 34, and a second synchronizer 35. The first output gear 31, the second output gear 32, the third output gear 33, and the second synchronizer 35 are all sleeved on the output shaft 34. Both the second output gear 32 and the second synchronizer 35 are drivingly connected to the output shaft 34. The second synchronizer 35 can move along an axial direction of the output shaft 34 to drivingly connect the output shaft 34 with the first output gear 31, and to drivingly connect the output shaft 34 with the second output gear 32. The first output gear 31 meshes with the first intermediate gear 21, the second output gear 32 meshes with the second intermediate gear 22, and the third output gear 33 meshes with the third intermediate gear 23.

In the embodiments of the present disclosure, transmission paths of the power system include the following.
1. The second motor 5 operates, and power sequentially passes through the input shaft 11, the first outer hub 143, the first input gear 12, and the first intermediate gear 21 to reach the first output gear 31.
2. The second motor 5 operates, and power sequentially passes through the input shaft 11, the first outer hub 143, the first input gear 12, the second clutch unit 25, and the second intermediate gear 22 to reach the second output gear 32.
3. The second motor 5 operates, and power sequentially passes through the input shaft 11, the first outer hub 143, the first input gear 12, the first intermediate gear 21, and the third intermediate gear 23 to reach the third output gear 33.
4. The second motor 5 operates, and power sequentially passes through the input shaft 11, the second outer hub, the second input gear 13, and the third intermediate gear 23 to reach the third output gear 33.
5. The second motor 5 operates, and power sequentially passes through the input shaft 11, the second outer hub, the second input gear 13, the second clutch unit 25, and the second intermediate gear 22 to reach the second output gear 32.
6. The second motor 5 operates, and power sequentially passes through the input shaft 11, the second outer hub, the second input gear 13, the first intermediate gear 21, and the first intermediate gear 21 to reach the first output gear 31.
7. The engine 6 operates, and power sequentially passes through the second clutch unit 25 and the first intermediate gear 21 to reach the first output gear 31.
8. The engine 6 operates, and power sequentially passes through the second clutch unit 25 and the second intermediate gear 22 to reach the second output gear 32.
9. The engine 6 operates, and power sequentially passes through the second clutch unit 25 and the third intermediate gear 23 to reach the third output gear 33.

In some embodiments of the present disclosure, as shown in FIG. 1, the power system further includes a third clutch unit 7. The third clutch unit 7 is drivingly connected to the intermediate transmission mechanism 2 and the engine 6. The third clutch unit 7 and the first transmission mechanism 1 are disposed on two opposite sides of the second motor 5 along the width direction of the vehicle.

It should be understood that the third clutch unit 7 is beneficial for the power system to cut off the power transmission from the engine 6 to the intermediate transmission mechanism 2 based on actual needs, which is conducive to adapting the operating state of the power system of the present disclosure to actual road conditions.

In some embodiments of the present disclosure, as shown in FIG. 1, the first motor 4 is sleeved on an outer side of the third clutch unit 7, and at least a portion of the third clutch unit 7 serves as a rotor of the first motor 4.

It should be understood that such an arrangement is beneficial for simplifying the structure of the first motor 4 and is beneficial for the first motor 4 to directly obtain power from the third clutch unit 7 and convert the power into electrical energy.

In the embodiments of the present disclosure, an outer hub of the third clutch unit 7 may serve as the rotor of the first motor 4.

In a second aspect of the present disclosure, a vehicle is provided. The vehicle includes the power system as described in the above embodiments.

It should be understood that, by adopting the power system of the above embodiments, the vehicle of the present disclosure has the same technical effects as the above embodiments, which will not be repeated here.

It should be understood by those of ordinary skill in the art that all or part of the steps for implementing the above embodiments are completed by hardware, or are completed by instructing relevant hardware by a program stored in a computer-readable storage medium. The storage medium mentioned above is a read-only memory, a magnetic disk, a compact disk, or the like.

Described above are merely preferred embodiments of the present disclosure and are not intended to limit the present disclosure. Any modifications, equivalents, improvements, and the like made within the spirit and principle of the present disclosure should fall within the protection scope of the present disclosure.

## Claims

1. A power system, applied to a vehicle, and comprising a first transmission mechanism (1), an intermediate transmission mechanism (2), a second transmission mechanism (3), a first motor (4), a second motor (5), and an engine (6), wherein
the first transmission mechanism (1), the intermediate transmission mechanism (2), and the second transmission mechanism (3) are sequentially arranged along a length direction of the vehicle;
the first transmission mechanism (1) is drivingly connected to the second motor (5) and the intermediate transmission mechanism (2);
the first motor (4) is drivingly connected to the intermediate transmission mechanism (2);
the second transmission mechanism (3) is drivingly connected to the intermediate transmission mechanism (2); and
the engine (6) is drivingly connected to the intermediate transmission mechanism (2).

2. The power system according to claim 1, wherein the first transmission mechanism (1) comprises an input shaft (11), a first input gear (12), a second input gear (13), and a first clutch unit (14), wherein the second motor (5) is drivingly connected to one end of the input shaft (11), both the first input gear (12) and the second input gear (13) are sleeved on the input shaft (11) and are drivingly connected to the intermediate transmission mechanism (2), the first clutch unit (14) is drivingly connected to another end of the input shaft (11), and the first clutch unit (14) is connected to the first input gear (12) and the second input gear (13), respectively.

3. The power system according to claim 2, wherein the first clutch unit (14) comprises a first inner hub (141), a second inner hub (142), and a first outer hub (143), wherein both the first inner hub (141) and the second inner hub (142) are sleeved on the input shaft (11), the first inner hub (141) is fixedly connected to the first input gear (12), the second inner hub (142) is fixedly connected to the second input gear (13), the first outer hub (143) is fixedly connected to another end of the input shaft (11), and both the first inner hub (141) and the second inner hub (142) are capable of abutting against the first outer hub (143).

4. The power system according to claim 1, wherein the first transmission mechanism (1) comprises an input shaft (11), a first input gear (12), a second input gear (13), and a first synchronizer (15), wherein one end of the input shaft (11) is drivingly connected to the second motor (5), the first input gear (12) and the second input gear (13) are sleeved on the input shaft (11) and are drivingly connected to the intermediate transmission mechanism (2), the first synchronizer (15) is arranged on the input shaft (11) and is capable of moving along an axial direction of the input shaft (11) to drivingly connect the first input gear (12) with the second motor (5), and to drivingly connect the second input gear (13) with the second motor (5).

5. The power system according to any one of claims 2 to 4, wherein the intermediate transmission mechanism (2) comprises a first intermediate gear (21), a second intermediate gear (22), a third intermediate gear (23), an intermediate shaft (24), and a second clutch unit (25), wherein the first intermediate gear (21), the second intermediate gear (22), and the third intermediate gear (23) are all sleeved on the intermediate shaft (24) the first intermediate gear (21) and the third intermediate gear (23) are drivingly connected to the intermediate shaft (24), the first intermediate gear (21) meshes with the first input gear (12), the third intermediate gear (23) meshes with the second input gear (13), and the second clutch unit (25) is configured to drivingly connect the second intermediate gear (22) with the input shaft (11), and to drivingly connect the engine (6) with the input shaft (11).

6. The power system according to claim 5, wherein the number of teeth of the first input gear (12) is greater than the number of teeth of the first intermediate gear (21), and the number of teeth of the second input gear (13) is less than the number of teeth of the third intermediate gear (23).

7. The power system according to claim 5, wherein the second transmission mechanism (3) comprises a first output gear (31), a second output gear (32), a third output gear (33), an output shaft (34), and a second synchronizer (35), wherein the first output gear (31), the second output gear (32), the third output gear (33), and the second synchronizer (35) are all sleeved on the output shaft (34), both the second output gear (32) and the second synchronizer (35) are drivingly connected to the output shaft (34), the second synchronizer (35) is capable of moving along an axial direction of output shaft (34) to drivingly connect the output shaft (34) with the first output gear (31), and to drivingly connect the output shaft (34) with the second output gear (32), the first output gear (31) meshes with the first intermediate gear (21), the second output gear (32) meshes with the second intermediate gear (22), and the third output gear (33) meshes with the third intermediate gear (23).

8. The power system according to claim 1, further comprising a third clutch unit (7), wherein the third clutch unit (7) is drivingly connected to the intermediate transmission mechanism (2) and the engine (6), and the third clutch unit (7) and the first transmission mechanism (1) are disposed on two opposite sides of the second motor (5) along a width direction of the vehicle.

9. The power system according to claim 8, wherein the first motor (4) is sleeved on an outer side of the third clutch unit (7), and at least a portion of the third clutch unit (7) serves as a rotor of the first motor (4).

10. A vehicle, comprising the power system as defined in any one of claims 1 to 9.
